# EUROPEAN PATENT SPECIFICATION

(11) **EP 1 356 893 B1**
(45) Date of publication and mention of the grant of the patent: **02.03.2005**
(21) Application number: 03009147.4
(22) Date of filing: 22.04.2003
(51) Int. Cl.: B23Q 11/08, B28D 1/00, B28D 1/04

(54) **Machine for working sheets of fragile material**
Maschine zum Bearbeiten von zerbrechlichem, blattförmigem Gut
Machine pour travailler feuilles de matériau fragile

(30) Priority: 23.04.2002 IT TO20020081 U
(43) Date of publication of application: 29.10.2003
(73) Proprietor: BIMATECH S.r.l., 12010 Cuneo (IT)
(72) Inventor: Paci, Luciano, 61100 Pesaro (IT); Tamburini, Marco, 61100 Pesaro (IT); Tamburini, Paolo, 61100 Pesaro (IT)
(74) Representative: Jorio, Paolo

(56) References cited:
- GB-A- 2 250 947
- US-A- 5 435 675
- US-A1- 2002 034 426

## Description

The present invention relates to a machine for working sheets of fragile material, such as glass, marble, granite, stone, etc.

As is known, the edges and main and/or lateral surfaces of sheets of the above type are normally ground, polished, drilled and/or milled on machines comprising a work sheet supporting surface, and a powered machining head movable over the supporting surface.

Known machines of the above type are often of considerable size to allow machining of sheets of widely differing shapes and sizes. When working small sheets occupying only part of the supporting surface, the rest of the supporting surface remains unused, so attempts have been made to also make use of the unused portion by positioning and preparing a second sheet while the first is being machined, and machining the second sheet as soon as the first is finished, thus reducing downtime and increasing the output of the machine. Such attempts, however, have proved unsuccessful, on account of the time and danger involved in positioning and preparing the second sheet. While machining the first sheet, in fact, the machining head moves continuously and often rapidly to minimize cycle time, so that the operators engaged in setting up the machine and the second sheet are in danger of being struck by the machining head or head actuating assembly, with obvious consequences, and are continually showered with dust and splinters produced by the machining head, thus making for a hostile and particularly hazardous working environment.

It is an object of the present invention to provide a machine designed to provide a straightforward, low-cost solution to the aforementioned drawbacks.

US- A-2002/0 034 426 describes a machine according to the preamble of claim 1.

According to the present invention, there is provided a machine for working sheets of fragile material, as defined in claim 1.

A non-limiting embodiment of the invention will be described by way of example with reference to the accompanying drawings, in which:
Figure 1 shows a view in perspective of a preferred embodiment of the machine according to the present invention;
Figure 2 is similar to Figure 1, and shows the machine with certain parts in a different operating position;
Figure 3 shows a section of a central portion of the Figure 2 machine.

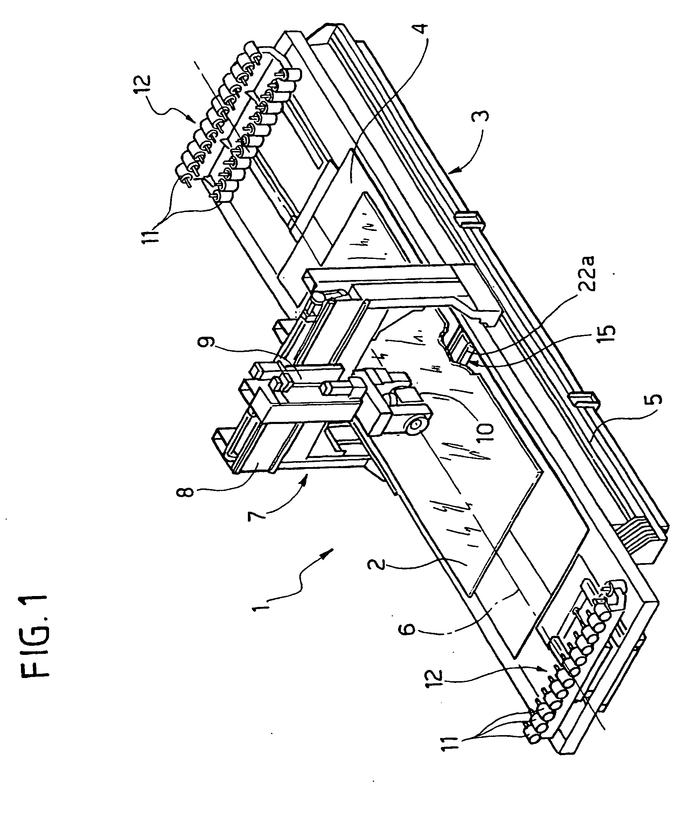

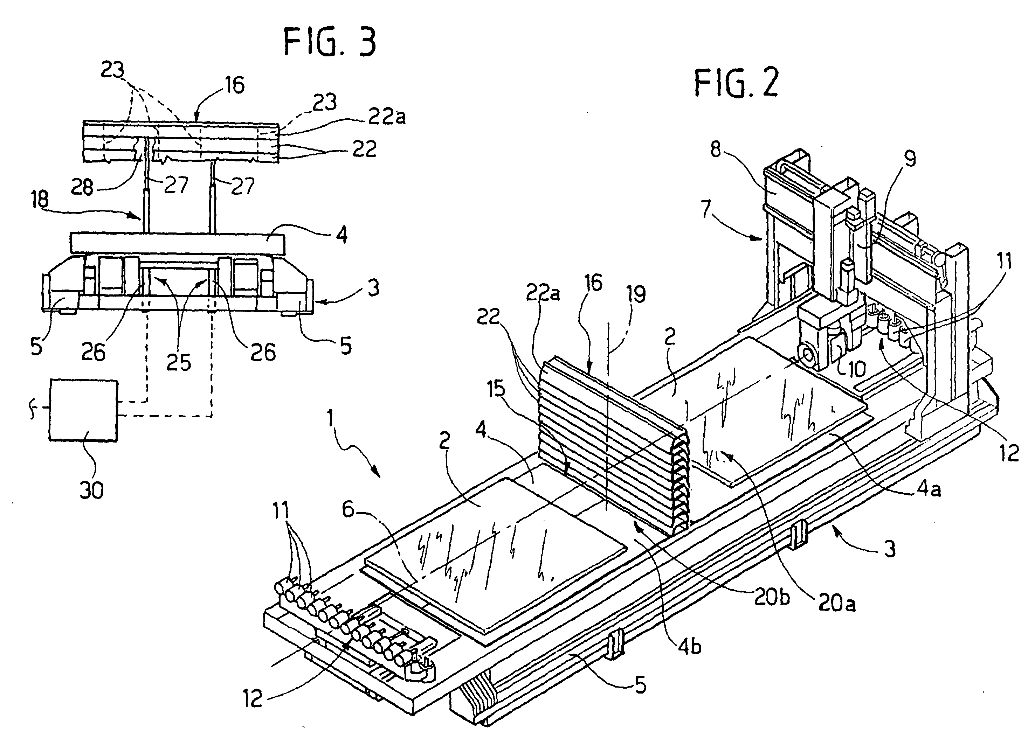

Number 1 in Figures 1 and 2 indicates as a whole a machine for working sheets 2 of fragile material, such as glass, stone, marble, granite, etc. Machine 1 comprises a base 3 defining, in known manner, a supporting surface 4 for work sheets 2, and supporting two slideways 5 located on opposite sides of base 3 and supporting surface 4. A known powered gantry structure 7 runs back and forth along slideways 5 in a longitudinal direction 6, and a cross member 8 of which is fitted with a powered carriage 9 supporting a known machining head 10, to which can be fitted a tool 11 selected from a number of tools housed in two different tool stores 12 at opposite longitudinal ends of supporting surface 4.

Supporting surface 4 of machine 1 comprises a transverse slot 15 perpendicular to longitudinal direction 6, and through which a movable partition or wall 16 of a partition device 18 (Figure 3) is moved, with respect to supporting surface 4 and in a direction 19 perpendicular to supporting surface 4, between a lowered rest position (Figure 1), in which wall 16 extends entirely beneath supporting surface 4, and a raised work position, in which wall 16 extends upwards from supporting surface 4. When wall 16 is in the lowered rest position, supporting surface 4 is made continuous by the top end of wall 16 closing slot 15; and, when wall 16 is in the raised work position, supporting surface 4 is divided physically by wall 16 into two completely separate supporting portions 4a and 4b. In other words, in the raised position, wall 16 defines, on supporting surface 4, two completely separate, independent work stations 20a and 20b, in which work can be conducted simultaneously, with the operations performed in one station having absolutely no effect on those performed in the other.

In the example described, wall 16 is a collapsible wall, and comprises a number of identical, superimposed section bodies 22 with their concavities facing downwards. More specifically, each body 22 has an upside down V-shaped cross section, is partly engaged by an end portion of the underlying body, regardless of the position assumed by bodies 22, is movable in direction 19 with respect to the adjacent body 22, and is connected to the adjacent body 22 by a relative mobility device conveniently comprising thread or strip elements 23 (Figure 3).

Wall 16 is moved between said lowered position, in which bodies 22 are collapsed inside one another, and the raised position, in which bodies 22 are still connected to one another but further apart than in the collapsed position, by two linear actuators 25, preferably two pneumatic telescopic jacks. Each actuator 25 comprises a body or jacket 26 connected integrally to base 3 beneath slot 15; and an output rod 27, which extends, parallel to direction 19, through slot 15 and through respective openings 28 (Figure 3) formed through bodies 22 and facing slot 15, and which has a top end portion connected integrally to the top end body 22a of wall 16.

In the example described, linear actuators 25 are controlled by a control unit 30, which also controls the movements of gantry structure 7 and machining head 10. In actual use, therefore, on the basis of the sheet 2 size and positioning data contained in control unit 30, unit 30 provides automatically, if sheet 2 can be worked in either of stations 20, for raising partition wall 16 and so forming a shielded area in which the machine 1 operators can work safely when machining sheet 2, by being fully protected against splinters and/or dust and any contact with gantry structure 7 or machining head 10.

Clearly, changes may be made to machine 1 as described herein without, however, departing from the scope of the present invention.

In particular, partition device 18 may be formed otherwise than as described by way of example, and may comprise a partition wall connected to base 3 to move in directions and/or along paths other than those indicated. For example, the wall may be a folding type, and may be located on supporting surface 4 and moved to and from a rest position extending alongside supporting surface 4. In an alternative embodiment, the partition wall may be a shutter type which rolls up about a horizontal or vertical drum, or even a cantilever type. In which latter case, the supporting surface has no slot 15.

Finally, different devices may be provided for moving the wall with respect to the supporting surface. The wall may even not be powered at all, and may be moved manually between the work and rest positions by a machine operator prior to commencing work of sheet 2.

## Claims

1. A machine (1) for working sheets (2) of fragile material, the machine (1) comprising a base (3); a supporting surface (4) for supporting the work sheets (2); a machining head (10) powered to move over said supporting surface (4) and perform machining operations on the sheets (2); and partitioning means (16) defining, on the supporting surface (4) two completely separate work stations (20a, 20b) and being **characterized in that** said comprising partition means (16) are movable between a partitioning position extending above said supporting surface (4) and defining, on the supporting surface (4), two completely separate work stations (20a)(20b), and a rest position extending clear of said supporting surface (4).

2. A machine as claimed in Claim 1, **characterized in that** said partition means (16) comprise a first and at least a second partitioning body (22) movable with respect to each other and with respect to said supporting surface (4).

3. A machine as claimed in Claim 2, **characterized in that** said first and said second partitioning body (22) slide with respect to each other and with respect to said supporting surface (4) in a straight travelling direction (19).

4. A machine as claimed in any one of the foregoing Claims, **characterized by** comprising actuating means (25) powered to move said partition means (16) between said partitioning position and said rest position.

5. A machine as claimed in Claim 4, **characterized in that** said actuating means comprise at least one linear actuator (25).

6. A machine as claimed in Claim 4 or 5, **characterized in that** said partition means (16) are movable in a direction (19) substantially perpendicular to said supporting surface (4); said partition means (16), in said rest position, extending entirely beneath said supporting surface (4).

7. A machine as claimed in Claim 6, **characterized in that** said supporting surface (4) comprises a transverse slot (15); and **in that** said partition means (16) are movable through said slot (15).

8. A machine as claimed in one of Claims 4 to 7, **characterized by** comprising a position control unit (30) for controlling the movement of said partition means (16) as a function of the size and position of the sheet (2) being worked on said supporting surface (4).

9. A machine as claimed in any one of the foregoing Claims, **characterized in that** said partition means (16) comprise a number of superimposed partitioning section bodies (22) parallel to one another and to said supporting surface (4); each said section body (22) being inserted partly inside an adjacent section body (22).

10. A machine as claimed in Claim 9, **characterized in that** said partition means (16) comprise relative mobility means (23) connecting each said section body (22) to the other section bodies (22).

11. A machine as claimed in Claim 10, **characterized in that** each said section body (22) has a substantially upside down V-shaped cross section; and **in that** said relative mobility means comprise thread or strip means.

## Patentansprüche

1. Maschine (1) zum Bearbeiten von Platten (2) zerbrechlichen Materials, wobei die Maschine (1) aufweist: eine Basis (3); eine Auflagefläche (4) zum Auflegen der zu bearbeitenden Platten (2); einen Bearbeitungskopf (10), der angetrieben ist, um sich über die Auflagefläche (4) zu bewegen und Bearbeitungsvorgänge an den Platten (12) auszuführen; und eine Unterteilungseinrichtung (16), die auf der Auflagefläche (4) zwei vollständig getrennte Arbeitsstationen (20a, 20b) ausbildet; und **dadurch gekennzeichnet, daß** die enthaltene Unterteilungseinrichtung (16) zwischen einer Unterteilungsposition, die sich über die Auflagefläche (4) hinweg erstreckt und auf der Auflagefläche (4) zwei vollständig getrennte Arbeitsstationen (20a, 20b) ausbildet, und einer Ruheposition, die sich außerhalb der Auflagefläche (4) erstreckt, bewegbar ist.

2. Maschine nach Anspruch 1, **dadurch gekennzeichnet, daß** die Unterteilungseinrichtung (16) einen ersten und wenigstens einen zweiten Unterteilungskörper (22) aufweist, welche in Bezug zueinander und in Bezug auf die Auflagefläche (4) bewegbar sind.

3. Maschine nach Anspruch 2, **dadurch gekennzeichnet, daß** der erste und zweite Unterteilungskörper (22) in Bezug zueinander und in Bezug auf die Auflagefläche (4) in einer geraden Laufrichtung (19) gleiten.

4. Maschine nach einem der vorstehenden Ansprüche, **dadurch gekennzeichnet, daß** sie eine angetriebene Betätigungseinrichtung (25) zum Bewegen der Unterteilungseinrichtung (16) zwischen der Unterteilungsposition und der Ruheposition aufweist.

5. Maschine nach Anspruch 4, **dadurch gekennzeichnet, daß** die Betätigungseinrichtung wenigstens ein lineares Betätigungselement (25) aufweist.

6. Maschine nach Anspruch 4 oder 5, **dadurch gekennzeichnet, daß** die Unterteilungseinrichtung (16) in einer Richtung (19) im Wesentlichen senkrecht zu der Auflagefläche (4) bewegbar ist; wobei sich die Unterteilungseinrichtung (16) in der Ruheposition im Wesentlichen vollständig unterhalb der Auflagefläche (4) erstreckt.

7. Maschine nach Anspruch 6, **dadurch gekennzeichnet, daß** die Auflagefläche (4) einen Querschlitz (15) aufweist; und dadurch, daß die Unterteilungseinrichtung (16) durch den Schlitz (15) hindurch bewegbar ist.

8. Maschine nach einem der Ansprüche 4 bis 7, **dadurch gekennzeichnet, daß** sie eine Positionssteuereinheit (30) zum Steuern der Bewegung der Unterteilungseinrichtung (16) als eine Funktion der Größe und Position der auf der Auflagefläche (4) bearbeiteten Platte (2) aufweist.

9. Maschine nach einem der vorstehenden Ansprüche, **dadurch gekennzeichnet, daß** die Unterteilungseinrichtung (16) eine Anzahl übereinander angeordneter Unterteilungsabschnittkörper (22) parallel zueinander und zu der Auflagefläche (4) aufweist; wobei jeder Abschnittkörper (22) teilweise in einen benachbarten Abschnittkörper (22) eingeführt ist.

10. Maschine nach Anspruch 9, **dadurch gekennzeichnet, daß** die Unterteilungseinrichtung (16) eine Relativbeweglichkeitseinrichtung (23) aufweist, welche jeden einzelnen Abschnittkörper (22) mit den anderen Abschnittkörpern (22) verbindet.

11. Maschine nach Anspruch 10, **dadurch gekennzeichnet, daß** jeder Abschnittkörper (22) einen im Wesentlichen umgedrehten V-förmigen Querschnitt aufweist; und dadurch, daß die Relativbeweglichkeitseinrichtung eine Faden- oder Bandeinrichtung aufweist.

## Revendications

1. Une machine (1) pour travailler des feuilles (2) de matériau fragile, la machine (1) comprenant une base (3) ; une surface d'appui (4) pour supporter les feuilles à travailler (2) ; une tête d'usinage (10) alimentée en puissance pour se déplacer au dessus de ladite tête d'usinage (4) et réaliser des opérations d'usinage sur les feuilles (2) ; et des moyens de cloisonnage (16) définissant, sur la surface d'appui (4), deux stations de travail (20a, 20b) complètement séparées, ladite machine étant **caractérisée en ce que** lesdits moyens de cloisonnage (16) sont mobiles entre une position de cloisonnement s'étendant au dessus de ladite surface d'appui (4) et définissant, sur ladite surface d'appui (4), deux stations de travail (20a, 20b) complètement séparées, et une position de repos s'étendant à distance de ladite surface d'appui (4).

2. Une machine selon la revendication 1, **caractérisée en ce que** lesdits moyens de cloisonnage (16) comprennent un premier et au moins un second corps de cloisonnage (22) mobiles l'un par rapport à l'autre et par rapport à ladite surface d'appui (4).

3. Une machine selon la revendication 2, **caractérisée en ce que** lesdits premier et second corps de cloisonnage (22) coulissent l'un par rapport à l'autre et par rapport à ladite surface d'appui (4) selon une direction de déplacement rectiligne (19).

4. Une machine selon l'une quelconque des revendications précédentes, **caractérisée en ce qu'**elle comprend des moyens d'actionnement (25) alimentés en puissance pour déplacer lesdits moyens de cloisonnage (16) entre ladite position de cloisonnement et ladite position de repos.

5. Une machine selon la revendication 4, **caractérisée en ce que** lesdits moyens d'actionnement comprennent au moins un actionneur linéaire (25).

6. Une machine selon la revendication 4 ou la revendication 5, **caractérisée en ce que** lesdits moyens de cloisonnage (16) sont mobiles dans une direction (19) substantiellement perpendiculaire à ladite surface d'appui (4) ; lesdits moyens de cloisonnage (16), dans ladite position de repos, s'étendant entièrement sous ladite surface d'appui (4).

7. Une machine selon la revendication 6, **caractérisée en ce que** ladite surface d'appui (4) comprend une rainure transversale (15) ; et **en ce que** lesdits moyens de cloisonnage (16) sont mobiles dans cette rainure (15).

8. Une machine selon l'une quelconque des revendications 4 à 7, **caractérisée en ce qu'**elle comprend une unité de commande de position (30) pour commander le mouvement desdits moyens de cloisonnage (16) en fonction de la dimension et de la position de la feuille (2) en phase d'usinage sur ladite surface d'appui (4).

9. Une machine selon l'une quelconque des revendications précédentes, **caractérisée en ce que** lesdits moyens de cloisonnage (16) comprennent plusieurs corps (22) avec une partie de cloisonnement, superposés, parallèles les uns aux autres et à ladite surface d'appui (4) ; chaque corps (22) à partie de cloisonnement étant inséré en partie à l'intérieur d'un corps à partie de cloisonnement adjacent (22).

10. Une machine selon la revendication 9, **caractérisée en ce que** lesdits moyens de cloisonnement (16) comprennent des moyens de mobilité relative (23) connectant chaque corps (22) à partie de cloisonnement aux autres corps (22) à partie de cloisonnement.

11. Une machine selon la revendication 10 **caractérisée en ce que** chaque corps (22) à partie de cloisonnement a une section transversale substantiellement en forme de V renversé ; et **en ce que** lesdits moyens de mobilité relative comprennent des moyens de filetage ou de ruban ;
